# EUROPEAN PATENT SPECIFICATION

(11) **EP 0 659 489 B1**
(45) Date of publication and mention of the grant of the patent: **30.12.1998**
(21) Application number: 95102747.3
(22) Date of filing: 26.09.1990
(51) Int. Cl.: B03D 1/16, B03D 1/22, D21F 1/70, D21B 1/32

(54) **Means for generating air bubbles in a liquid**
Einrichtung zur Erzeugung von Luftblasen in einer Flüssigkeit
Dispositif pour générer des bulles d'air dans un liquide

(30) Priority: 16.10.1989 JP 266210/89
(43) Date of publication of application: 28.06.1995
(62) Divisional of application: 90310514.6
(73) Proprietor: ISHIKAWAJIMA-HARIMA JUKOGYO KABUSHIKI KAISHA, Chiyoda-ku Tokyo-to (JP); ISHIKAWAJIMA SANGYO KIKAI KABUSHIKI KAISHA, Chuo.ku, Tokyo-to (JP)
(72) Inventor: Iwashige, Naoyuki, Yokohama-shi, Kanagawa-ken (JP); Eguchi, Masakazu, Chiba-ken (JP)
(74) Representative: Jennings, Nigel Robin

(56) References cited:
- FR-A- 2 580 683
- US-A- 1 608 896

## Description

The present invention relates to means for generating air bubbles in a liquid, particularly for use in a flotation machine for de-inking waste paper stock, comprising a turbine rotor in the form of a cage including a plurality of peripheral blades or rods, which define spaces between them, and means for supplying pressurised air in the vicinity of the rotary member. Such flotation machines are used in waste paper recovery installations for defiberising and cleaning waste paper and reconverting it into paper making material. In such a machine, bubbles are produced in the stock liquid in a flotation cell and ink and other particles, such as oil and pitch, which were attached to the paper are adsorbed by the bubbles and carried to the liquid surface by buoyancy in the form of froth which is then removed via a froth receptacle.

Methods of de-inking waste paper are in general divided into three types, namely the flotation method, the washing method and a combination thereof.

In the flotation method, the smaller the diameters of the bubbles, the more readily the fine ink particles are adsorbed by them. It is therefore important for efficient operation of the flotation method that the total surface area of the bubbles is large, that the bubbles are uniformly distributed in the waste paper stock liquid and that the residence time of the bubbles in the stock liquid is long. For the same quantity of air which is added to the stock liquid, the finer the bubbles, the larger is the total surface of the bubbles and thus the slower is the flotation speed of the bubbles. The efficiency of the flotation method is therefore principally determined by the uniform admixing of a larger quantity of fine air bubbles to the stock liquid and by the effectiveness of their removal as froth from the liquid.

Formerly, printing ink adhered relatively weakly to paper fibres and was relatively readily separable. The quality requirements for de-inked pulp were also not particularly high. As a result, known flotation machines could attain satisfactory results with a relatively small quantity of air and the resultant relatively short residence time of the bubbles.

Recently, problems have arisen which can not be solved by the known de-inking technique using the flotation method. Firstly, the adhesion strength of printing ink to paper has increased as printing techniques have been developed or refined, such as the use of the offset process for printing newspapers, so that mechanical force is required to separate the ink resulting in the separated ink particles being of smaller diameters than previously. Secondly, the utilisation of waste paper has greatly increased as a result of the awareness that natural resources are decreasing globally. Thirdly, the quality demanded for paper used in printing has increased because of an increased demand for visual appeal and coloration of printed paper. Fourthly, strict regulations are increasingly applied to effluent water discharged from paper-making processes.

In recently developed flotation machines the high rotational speed of the rotor causes the air bubbles to be subjected to strong shearing forces and thus to be converted into a larger quantity into fine air bubbles, which are mixed into the stock liquid. The agitating action is intensified to satisfactorily diffuse air bubbles into the liquid and to increase the residence time of the bubbles in the liquid thereby increasing the opportunity for the ink particles to make contact with the bubbles. The cell is of large capacity to afford a sufficient period of time to permit floating and gathering of the air bubbles.

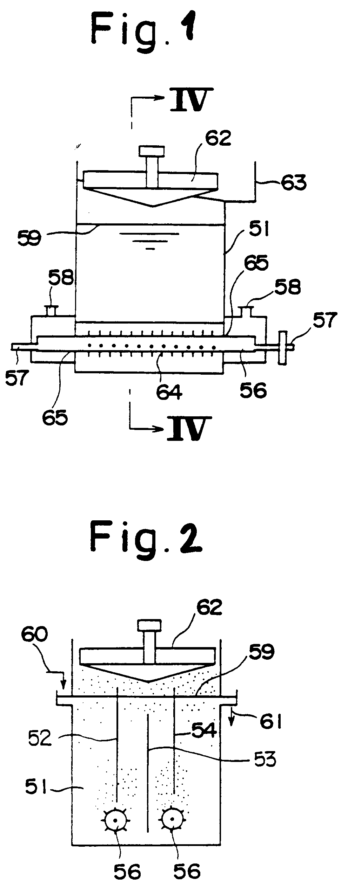

Figures 1 and 2 are a diagrammatic side sectional view and a sectional view on the line IV-IV in Figure 1, respectively, of a recently developed rotary diffusion type flotation machine (Japanese Patent 1st Publication No.245390/1986) in which reference numeral 51 denotes a vertical cylinder type cell; 52,53 and 54, weirs; 56, rotary diffusion pipes; 57, a rotating shaft; 58, an air supply inlet; 59, the liquid level; 60, a stock supply inlet; 61, a stock outlet; 62, a rotary froth collection blade; and 63, a froth trough.

The stock liquid flows through the inlet 60 into the cell 51 and repeatedly flows up and down in a serpentine manner between the weirs 52,53 and 54 and then is discharged through the outlet 61. The air flows through the inlet 58 into the diffusion pipes 56, which rotate at high speed, and flows into the stock liquid through vent holes 20-40mm in diameter formed in small projections 64 on the pipes 56. Because of the difference in velocity of the liquid and the surface of the diffusion pipes 56, the air is subjected to strong shearing forces and converted into fine air bubbles, which are diffused into the liquid. The stock liquid is violently agitated by the rotational force. The air bubbles in the liquid float up to the liquid level 56 to form froth, which is collected by the scraping blade 62 into the trough 63, and discharged to the exterior. The discharged froth may be secondarily processed as needs demand.

In a flotation machine of this type, in order to produce fine air bubbles and agitate the liquid in the vessel, which has a large capacity, the large-diameter pipes 56 must be rotated at high speed so that powerful driving force is required. The stock liquid repeatedly flows up and down between the weirs 52,53 and 54 and the bubbles in the downward flowing portions have difficulty in rising upwards which adversely affects the separation of the bubbles from the liquid. As a result, the production of froth over the liquid level varies between the liquid surface portions where the liquid flows upwardly and those where the liquid flows downwardly. Since the air is injected into the liquid from the interior of the diffusion pipes 56, a liquid-tight seal 65 between the pipes and the wall of the cell is necessary but complicated and difficult to maintain. When the machine is started or stopped or the balance between the air pressure and the liquid pressure is lost, the stock liquid may flow into the diffusion pipes 56 and adhere to the interior wall thereof due to centrifugal force, thereby clogging the air vents in the wall of the pipes 56. The agitated flow patterns produced by the diffusion pipes 56 are unstable so that when variations in concentration or the like of the liquid occur, the flow rates of the stock liquid may vary and the air bubbles may suddenly burst.

US-A-1608896 discloses apparatus for concentrating ores by the flotation process in which ore in pulp form is introduced into the bottom of one end of an elongate cell in which air bubbles are generated. The mineral pulp forms a froth with the air bubbles which then flows over a weir and out through an outlet at the other end of the cell. The air bubble generator comprises a horizontally extending rotor whose periphery is defined by spaced longitudinal slats over which is wrapped a permeable screen which is covered with canvas or the like. Longitudinal vanes extend along the exterior of the rotor. In use, air is supplied to the interior of the rotor as it rotates and this air passes out through the screen and canvas covering in the form of bubbles.

It is the object of the present invention to provide means for generating air bubbles in a liquid which will contribute to the solution of the various problems of the machines described above. The invention is based on the following concept and on the results of experiments conducted by the inventors.

When a certain volume of air is mixed into a liquid, the total surface area of the bubbles is substantially in inverse proportion to the mean diameters of the bubbles so that the smaller the mean diameter of the bubbles, the larger is their total surface area. The velocity of air bubbles flowing upwardly is substantially proportional to the mean diameter of the bubbles so that the residence time of the bubbles in the liquid is substantially inversely proportional to the mean diameter of the bubbles if the depth of the liquid remains constant. It follows therefore that opportunity of the air bubbles to come into contact with the ink particles to adsorb and entrap them is substantially inverse proportional to the square of the mean diameter of the bubbles so that the smaller the diameter of the bubbles, the more the said opportunity increases.

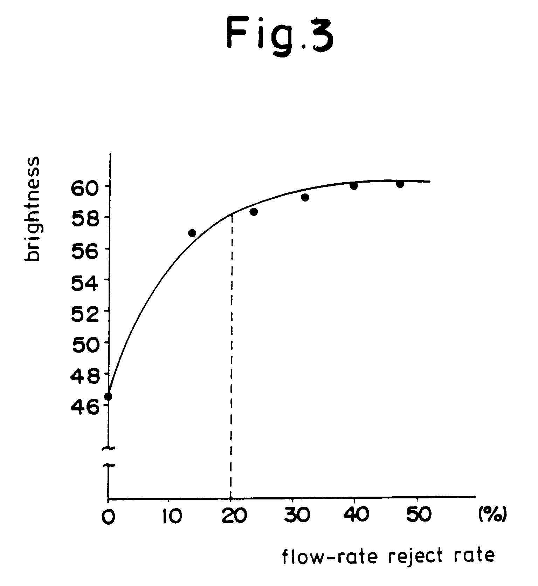

According to experimental results, it is noted that the larger the volume of air which is admixed and the larger the volume of the froth discharged, the better is the brightness of the de-inked paper. Figure 3 illustrates the relationship between the brightness (Hunter) of the accept stock and the flow-rate reject rate, obtained by processing waste paper stock consisting of 100% offset printed newspaper. It is noted that even if the flow-rate reject rate is increased in excess of 20%, the brightness is not substantially further increased, so that a flow-rate reject rate of the order of 15-20% is preferable (in this case, the fibre stock in the reject is of lower concentration than that at the stock inlet and the stock reject rate is of the order of approximately 5%).

Based on the above-mentioned problems encountered in the known flotation machines and the results of the experiments conducted by the inventors, the present invention has the following aims:
(1) Fine air bubbles are to be uniformly admixed to the stock liquid, thereby eliminating the necessity of blowing an excessive volume of air into the liquid and thus reducing the power required for blowing the air.
(2) The air bubbles are to be uniformly admixed to the stock liquid with a reduced agitating power.
(3) Finer air bubbles are to be produced to remove finer ink particles and to increase the opportunity for trapping the ink particles.
(4) The air bubble generating means or device is to be simple in construction and in maintenance and reliable in operation.

According to the present invention means for generating air bubbles in a liquid of the type referred to above is characterised in that the means for supplying pressurised air comprises an air supply line situated adjacent the outer periphery of the turbine rotor and having at least one air supply port outside the turbine rotor and directed towards the turbine rotor.

Such a means for generating air bubbles is particularly advantageous in a flotation machine of the type referred to above but may also have other applications.

When used in a machine of the type referred to above, it is rotated very rapidly to generate fine air bubbles, the liquid and the air being drawn into the rotor, whereby the air is subjected to substantial shearing forces, mixed within the rotor and then caused to flow outwardly again, whereby the air is again subjected to substantial shearing forces. The stock liquid mixed with the fine air bubbles then rises upwardly towards the free liquid surface due to its reduced apparent specific gravity. As mentioned above, the bubbles, or at least a proportion of them, adsorb ink particles and remain in the form of froth on the liquid surface from which they flow into the froth receptacle, which preferably extends along the entire length of the cell along one side thereof or optionally along the centre thereof in the event that there are two bubble generators and two swirl patterns in opposite senses within the cell.

It is preferred that the turbine rotor extends generally horizontally and that the air supply line is situated above the turbine rotor and extends substantially parallel to it. The rotor may be of cylindrical shape but it may also be of frusto-conical shape or of stepwise increasing diameter along its length.

The turbine rotor may also include an inner core which is coaxial with the rotor axis and whose shape corresponds to that of the rotor but is smaller than it. This can result in a higher efficiency of bubble production and the consumption of less power to drive the rotor.

The air supply line may have only a single air supply port, which may be in the form of a slit extending along some or all of the length of the air supply line, or a plurality of separate air supply ports.

The invention also embraces a flotation machine for de-inking waste paper stock of the type comprising a flotation cell defining a reservoir for a stock liquid which, in use, forms a free liquid surface in the cell, a froth receptacle at the upper portion of the cell for receiving froth floating up to the free liquid surface, a stock inlet at one end of the cell for supplying the stock liquid, a stock outlet at the other end of the cell for discharging the stock liquid and at least one rotary air bubble generating means situated within the lower portion of the cell.

As mentioned above, the air supply line is preferably situated above the rotor and air discharged from the supply line flows with the liquid rotating with the rotor and becomes entrapped in a reduced pressure zone at the rear of each blade and then flows into the rotor. The stock liquid which circulates with the rotor impinges against the air supply line and is thus suddenly decelerated whereby its pressure is increased which results in a proportion of it flowing into the turbine rotor. This inflow of the stock liquid also causes air to flow into the rotor with it. The air and liquid passing into the rotor are subjected to substantial shearing forces by the inner edges of the blade and are thus mixed together. The liquid subsequently flows out of the turbine rotor due to the action of centrifugal force so that the air bubbles entrained in it are again subjected to substantial shearing forces by the outer edges of the blade. This results in the bubbles being particularly small and becoming uniformly distributed within the stock liquid. The majority of the stock liquid in the vicinity of the rotor and circulated by it flows tangentially away from the rotor in an upward direction and promotes the upward flow of the liquid which is caused, in part, by the reduced buoyancy of that proportion of it in which air bubbles are entrained.

Further features and details of the invention will be more apparent from the following description of certain preferred embodiments which is given by way of example with reference to Figures 4 to 16 of the accompanying drawings, in which:
Figure 4 is a plan view of a flotation machine for de-inking including an air bubble generator in accordance with the present invention;
Figure 5 is a sectional view along the line VII-VII in Figure 4;
Figure 6 is a perspective view of a cell of the flotation machine in accordance with the present invention;
Figure 7 is a side view of the air bubble generator in accordance with the present invention in the flotation machine of Figures 4 to 6;
Figure 8 is a sectional view along the line X-X in Figure 7;
Figure 9 is a graph illustrating the relationship between the rotational speed of the rotor and the volume of air dissolved;
Figure 10 is a graph illustrating the rotational speed of rotor and maximum G/V;
Figures 11 - 13 are views showing modifications of the turbine rotor of the flotation machine in accordance with the present invention;
Figures 14(a), 14(b) and 14(c) are sectional views showing modifications of a turbine blade on the turbine rotor;
Figure 15 is a sectional view of a modification of the air bubble generator; and
Figures 16(a), 16(b) and 16(c) are sectional views showing modifications of the air supply pipe of the flotation machine in accordance with the present invention.

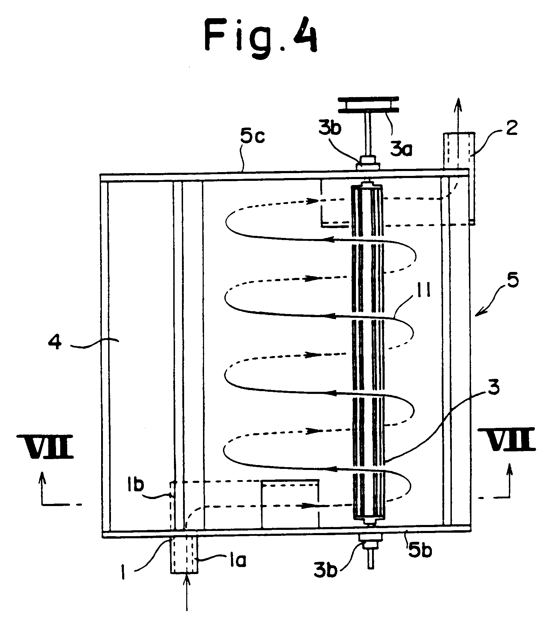

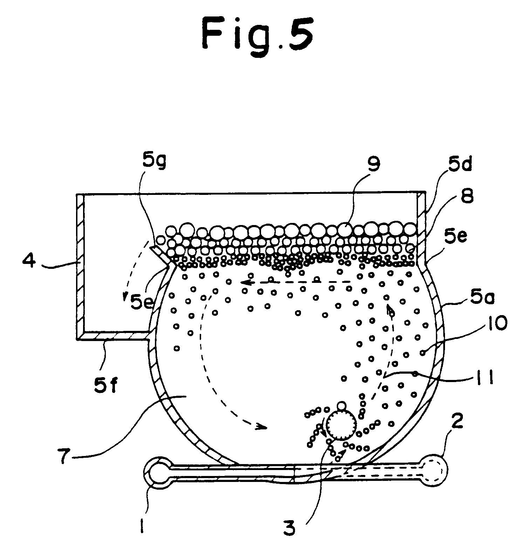

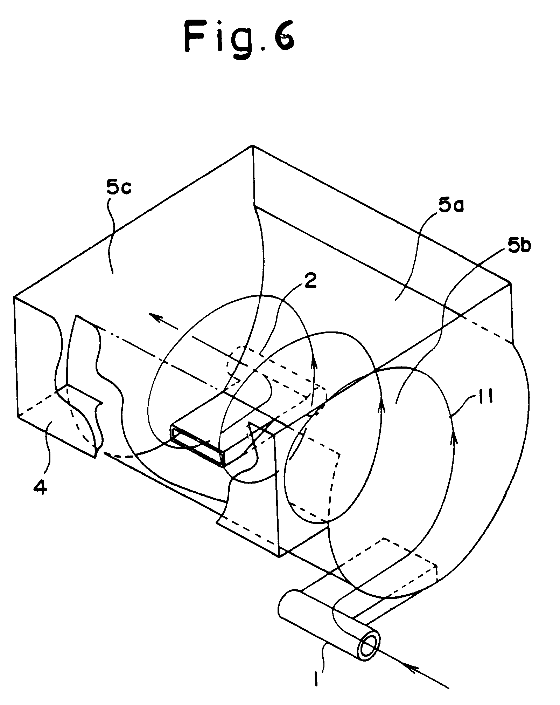

Referring to Figures 4 - 8, reference numeral 1 represents a stock inlet; 2, a stock outlet; 3, an air bubble generator; 4, a trough for trapping froth; 5, a flotation cell comprising a cylindrical barrel 5a and end plates 5b and 5c attached to opposite ends thereof; 7, a stock liquid; 8, the free surface of the liquid 7; 9, froth; 10, fine air bubbles; 11, spiral flow path; 21, a turbine rotor; 22, journals; 23, ribs; 24, blades; 25, a turbine rotor body; 26, an air supply pipe; and 26a, an air port.

The cell 5 comprises the substantially horizontally disposed and generally cylindrical barrel 5a which is cut away at its upper portion, end plates 5b and 5c attached to the opposite ends of the barrel 5a and frame members 5d which, together with a bottom plate 5f, define a froth trough 4 which is of rectangular section and extends laterally from one side of the cell along substantially the entire length thereof. More specifically, one of the members 5d extends from an upper cut edge 5e at one side of the barrel 5a; two of the members 5d extend vertically from the end plates 5b and 5c, are connected to the one member 5d and extend horizontally away from said cut edge 5e; and the remaining member 5d is connected to the said two members 5d and to the bottom plate 5f, thereby defining the froth trough 4. An overflow or weir plate 5g is formed integral with a further cut edge 5e at the other side of the barrel 5a and extends obliquely outwardly so that froth overflows over the plate 5g into the trough 4.

The stock inlet 1 at the bottom of one end of the cell 5 comprises an inlet pipe 1a extending in the axial direction of the barrel 5a and a nozzle 1b which is connected to the inlet pipe 1a and extends perpendicular to the pipe 1a and tangential to the barrel 5a. The stock outlet 2 at the bottom of the other end of the cell 5 is substantially similar in construction to the stock inlet 1 and is symmetrical with the inlet 1.

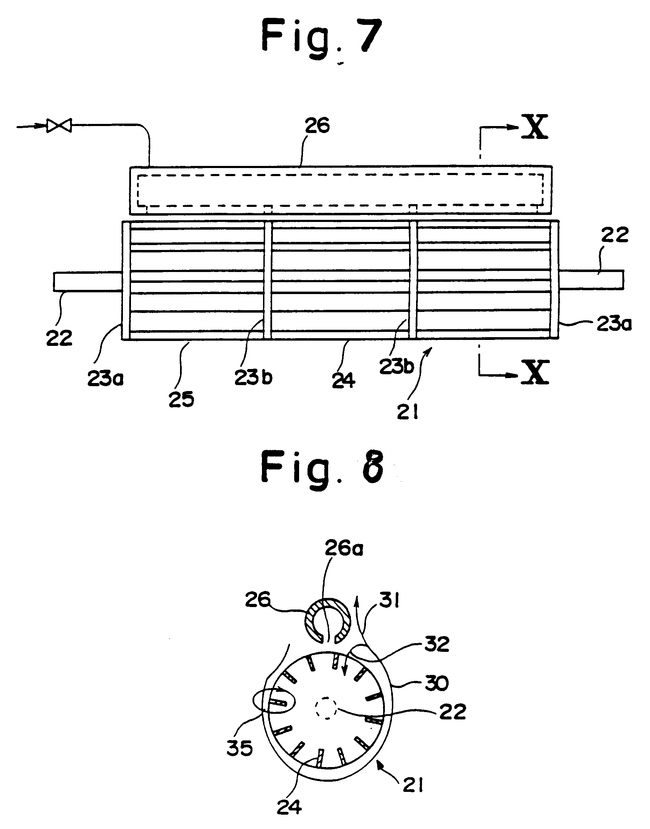

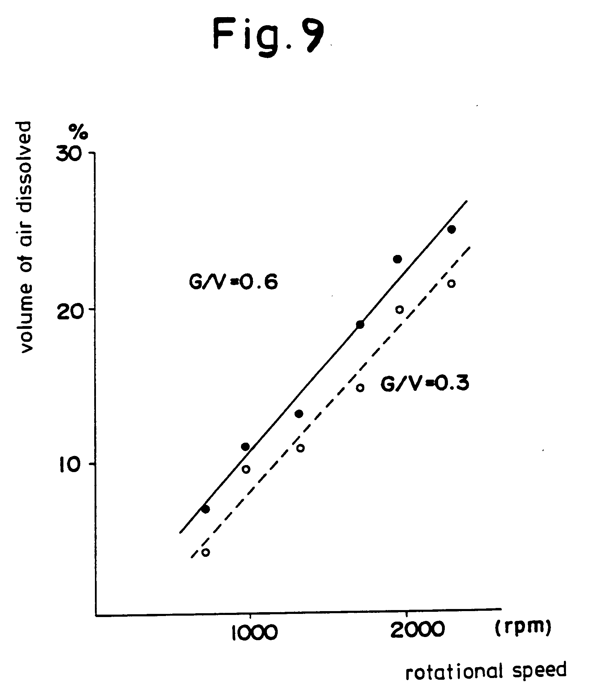

The air bubble generator 3 extends between the end plates 5b and 5c within the lower portion of the cell 5. As shown in Figures 7 and 8, the generator 3 comprises a turbine rotor 21 and an air supply pipe 26 disposed above and adjacent to it. The rotor 21 comprises a rotor body 25 in the form of a cylindrical cage and axial journals 22 extending outwardly from opposite ends of the body 25. More specifically, the rotor body 25 is constructed by disposing a plurality (four in the embodiment) of equispaced, parallel disc-shaped ribs 23a and 23b having the same diameter coaxially, a plurality of equiangularly spaced blades 24 being securely attached to the outer peripheral surfaces of the ribs 23a and 23b. The air supply pipe 26 has at least one air outlet 26a which is open toward the turbine rotor 21 and which may be in the form of round hole or elongate slit. The journals 22 of the turbine rotor 21 extend through the end plates 5b and 5c and are supported by them in bearings 3b securely attached to their outer surfaces. A belt pulley 3a is carried by one o the journals 22 and is drivingly coupled to a motor (not shown) so that the pulley 3a may be rotated at high speed.

The air bubble generator 3 disposed below the axis of the barrel and is offset from the axis of the barrel 5a, when viewed from above, toward the rising path (to the right in Figure 4) of the spiral flow path followed by the stock liquid introduced into the cell 5 from the stock inlet 1.

The mode of operation of the machine described above is as follows:

The stock liquid 7 flows into the cell 5 in the axial direction thereof through the inlet pipe 1a of the stock supply inlet 1 and changes its flow direction by substantially 90 degrees so that it flows generally tangentially adjacent the bottom of one end of the cell 5 from the nozzle 1b. Due to the inertia of the stock liquid, it flows generally towards and reaches the air bubble generating device 3 where the liquid 7 is mixed with fine air bubbles and then has a reduced apparent specific gravity and thus buoyancy. The air bubbles are produced by the air flowing out through the port(s) 26a in one or more streams which are fragmented into fine bubbles by rotation of the bubble generator 3. Due to the combination of inertia on introduction into the cell 5 with buoyancy some of the liquid 7 flows upwardly and reaches the free liquid surface 8. A proportion of the liquid flow 30 moves with the outer peripheral surface of the turbine rotor 21 and impinges on the air supply pipe 26 above the rotor 21 and is divided into upward and downward flows 31 and 32. The upward flow 31 intensifies the above-described rising flow while the downward flow 32 assists introduction of the air from the pipe 26 into the rotor 21.

The stock liquid containing the fine bubbles 10 rises and reaches the free surface 8. It flows over the free surface 8 toward the froth trough 4 while some fine bubbles remain as froth over the free surface 8.

The stock liquid now substantially free from the fine air bubbles 10 flows down along the inner surface of the barrel 5a on the side of the froth trough 4 and again reaches the air bubble generating device 3. The stock liquid thus swirls repeatedly around the axis of the cell. Since liquid flows continuously into the cell, it is progressively displaced toward the stock outlet 2 and thus adapts, as shown in Figures 4-6, a spiral flow pattern 11 in the counterclockwise direction and flows out of the cell 5 through the stock outlet 2.

As mentioned previously, the construction of the air bubble generator 3 is such that the compressed air is blown towards the turbine rotor 21 which rotates at high speed, and as shown in Figure 8, a circulating flow 35 is formed around the blades 24 so that the compressed air flows into the rotor 21 from the rear, with respect to the direction of movement of the blades 24. The stock liquid 7 containing the fine air bubbles is then forced to flow out of the rotor by the centrifugal force and by the force responsible for the circulating flow 35. On two separate occasions, i.e. when the air flows into and out of the turbine 21, it is subjected to extremely strong shearing forces and thus becomes fine air bubbles 10 for mixing with the stock liquid 7. Due to the bubble generator 3 in the spiral flow path 11, the air bubbles 10 are uniformly mixed into the stock liquid and mixing and separating of the air bubbles 10 into and from the liquid 7 is repeated many times. Because the air bubbles 10 are uniformly distributed in the liquid 7 and have a constant rising velocity, the liquid flow remains in a stable state. Due to the shape of the cell, no turbulence of the liquid flow, no disturbance of the free surface and no variation in the distribution of the froth will occur. As a result, a stabilised bed of froth 9 is formed over the free surface 8 and no re-entrainment of the bed of the froth 9 by the liquid 7 will occur. The froth bed over the free surface 8 is forced toward the trough 4 due to the spiral flow of the stock liquid 7 and overflows over the overflow plate 5g into the trough 4 from which the froth is discharged to the exterior and, if necessary, is subjected to a secondary process. The secondarily processed accept is returned to the stock inlet 1.

It is said that the diameter of ink particles removable from a liquid by a flotation process for de-inking is 10µm or more and that the optimum diameter range of the ink particles is 10-15µm. It is also said that the diameter of the ink particles, which are solids comprising carbon particles bound by resin binder, adsorbable by an air bubble 1mm in diameter is of the order of 13µm. It follows therefore that the smaller the diameter of the air bubbles, the smaller the diameter of the ink particles which can be adsorbed. In the field of newspaper printing, offset printing is replacing relief printing. The carbon particles in the ink for offset printing are very fine (of the order of 0.01µm) and cannot be readily removed from fibres after printing. In order to overcome this problem, a de-inking method is known in which the stock is condensed to a very high degree and the fibres are subjected to mechanical shearing forces, thereby removing the attached ink particles. The shearing forces, of course, make the free ink particles smaller so that the diameter of the ink particles to be removed by the flotation method becomes less and less.

As compared with the conventional air bubble generating devices, the air bubble generating device according to the present invention will generate substantially smaller air bubbles. Because of the considerable difficulties in measuring the diameter of an air bubble, the volume of air dissolved in a liquid is used as a parameter indicating the diameter and volume of air bubbles contained since the smaller the diameter of the generated bubble, the slower is the floating or rising velocity and therefore the larger is the volume of air remaining in the liquid. The volume of dissolved air can be measured in terms of the increment or rise of the liquid level.$\text{Dissolved air volume (%)=} \frac{\text{Increment}}{\text{Initial liquid volume + increment}} \text{x100}$

In the known flotation machine, the dissolved air volume is 2-10%, but with the bubble generator of the present invention, the dissolved air volume may be increased up to 20-25%. The higher the rotational speed of the turbine, the larger is the dissolved air volume.

The graph shown in Figure 9 illustrates the dissolved air volume
- when G/V =: 0.6 and 0.3 respectively.
- where G =: Air volume fed by blower m³/min;
- V =: the volume of the cell m³;

- Experimental conditions:: Waste newspapers were used as stock and the concentration was 1% with de-inking agent added thereto.

It is noted that even when the air volume is increased, the dissolved air volume does not substantially increase accordingly; but the higher the rotational speed, the more the dissolved air volume increases. In other words, it is possible to change the diameter of the air bubbles by changing the rotational speed.

The construction and operation of the air bubble generating device according to the present invention will now be described in detail in comparison with the recently developed rotary type diffusion device which is most similar to it.

One of the most significant constructional differences between the device in accordance with the present invention and the known device resides in that the former has the air supplied from the exterior of the rotor while the latter has the air supplied from the interior of the rotor.

From the standpoint of maintainability, the difference in construction plays an important role. In the former, the air supply system and the rotor are independent from each other so that the device is simple in construction and is very easy to clean and to maintain while, in the case of the latter, the liquid-tight sealing is very complicated constructionally and cleaning when disassembled and inspection and maintenance are difficult.

More specifically, the principal difference is that the air bubble generating device in accordance with the present invention has air and liquid introduced into the interior thereof from the exterior of the turbine so that they are mixed in the interior of the device and then discharged while in the known device the air is discharged from the interior and mixed with the liquid around the periphery of the rotor.

From the standpoint of stabilising the generation of air bubbles, the difference in construction described above has a very important influence. In the device of the present invention, unless the volume of air is exceptionally large, the air and the liquid are introduced into the turbine, mixed together and are discharged so that regardless of the air volume and the liquid pressure, the air bubble generation is stabilised. On the other hand, in the known device, when the balance between the air and liquid is lost, no air bubbles can be generated. Thus, when the air volume is increased, the rotor is surrounded by air so that a sudden burst of air bubbles may occur; when the air volume is decreased, the liquid may invade into the rotor, causing clogging of the air vents.

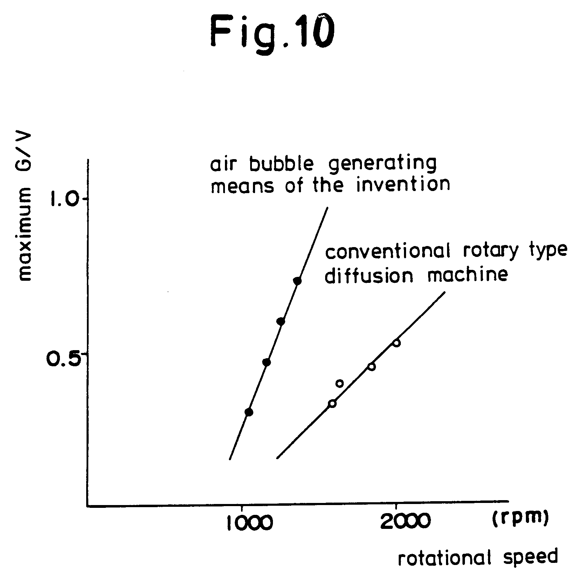

Figure 10 is a graph illustrating the limit G/V of the air bubble generating device in accordance with the present invention and the conventional rotary type diffusing machine, both of which have rotors of equal diameter. In this case, the limit G/V means the maximum air volume which does not cause a sudden burst of air bubbles. It is clear that the limit G/V of the device of the present invention is much higher.

The second difference between the two devices relates to the difference in size of the generated air bubbles. In the device of the present invention, the air bubbles are subjected to the shearing forces twice, that is, upon entering and leaving the rotor and the air bubbles are therefore made much smaller. On the other hand, in the known device, the air bubbles are subjected only once to a shearing force, i.e. when the air flows out of the rotor, so that the size of the air bubbles is relatively high. The dissolved air volume, which, as mentioned above, is an indication of the size of the air bubbles generated is, under the same conditions, 24% in the case of the present invention and 12% in the case of the known rotary type diffusion device. The experimental conditions were as follows:

G/V = 0.25,
- Stock: : waste newspapers,
- Consistency: : 0.8%, and
- Rotor peripheral velocity: : 600 m/min.

In the known rotary type diffusion machine, a major part of the rotating force is used for agitation so as to distribute the air bubbles uniformly in the cell.

The air bubble generating device in accordance with the present invention is offset towards the rising liquid flow in the cell, i.e. towards that side of the cell on the periphery of the rotor moves upwardly, so that the rising stream with the air bubbles reinforces the spiral upward flow of the liquid. The liquid flow caused by the turbine rotor 21 impinges against the air supply pipe 26 so that part of that liquid flows upwards and consequently the spiral flow is further intensified. The spiral liquid path is stable and the air bubbles are entrained by the spiral liquid flow and distributed uniformly in the cell so that the diameter of the turbine rotor 21 can be reduced to the minimum size consistent with introducing a suitable volume of air into the liquid. The power required for agitation is reduced so that the overall power consumption is reduced also.

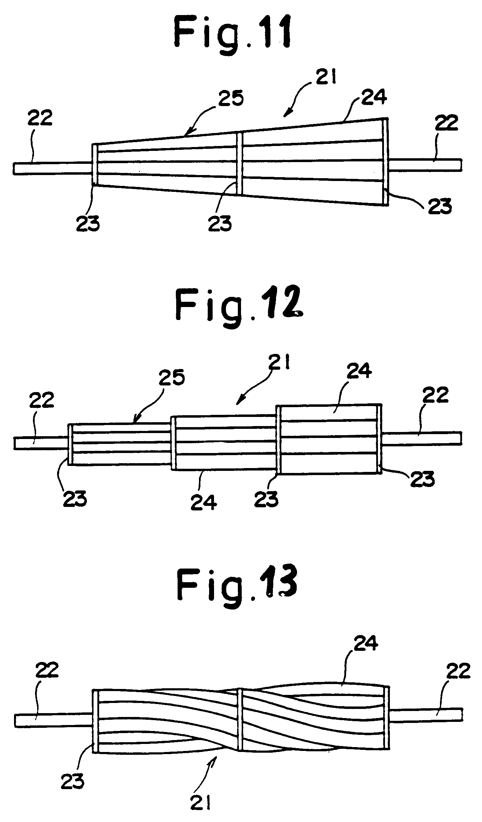

Figure 11 shows a first modification of the turbine rotor of the bubble generating device. The rotor is frusto-conical and its diameter adjacent to the stock liquid outlet is increased to increase the peripheral speed of the outlet portion of the rotor in order to make the air bubbles smaller. As a result, the cleaning or purification effect increases with decreasing distance from the outlet.

Figure 12 shows a second modification of the turbine rotor in which the rotor has a stepped diameter and comprises a plurality of cylinders of different diameter coaxially interconnected in the order of the magnitude of their diameters. This modification can attain effects similar to that shown in Figure 11.

Figure 13 shows a third modification of the turbine rotor in which the turbine blades are spirally twisted so that the blades impart an axial force to the stock liquid. As a result, the spiral flow of the stock liquid can be controlled.

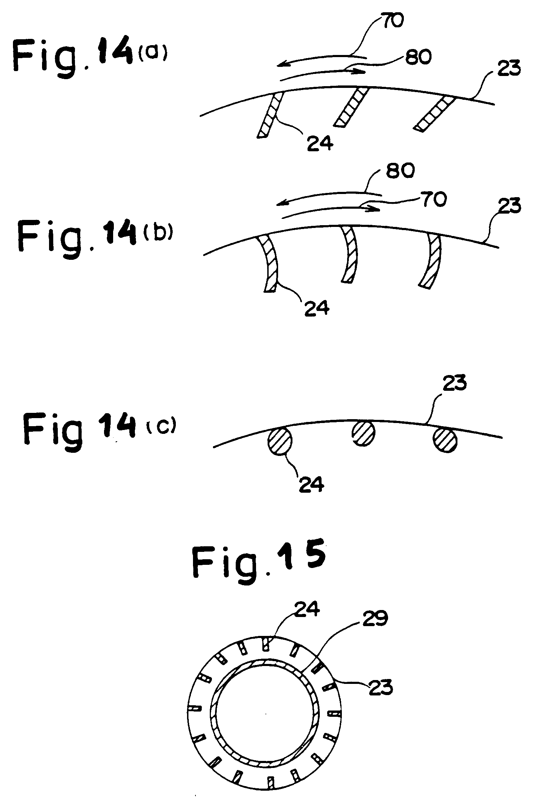

Figure 14(a) shows a first modification of the turbine blades of the turbine rotor in which each blade is inclined at an angle with respect to the radial direction. Upon rotation of the rotor in the direction indicated by the arrow 70, the rotor can be driven by a smaller torque and the volume of the air bubbles processed is decreased accordingly. On the other hand, when the rotor is rotated in the direction indicated by the arrow 80, more torque is needed for driving the rotor and the volume of air bubbles processed is increased.

Figure 14(b) shows a second modification of the turbine blades in which each blade is arcuate. When the blade is rotated in the direction indicated by the arrow 70, the driving force required is decreased and the volume of the air processed is reduced. On the other hand, when it is rotated in the direction indicated by the arrow 80, the driving force required is increased and the volume of air processed is increased.

Figure 14(c) shows a third modification of the turbine blades in which each blade is in the form of a round rod which may be more readily fabricated to reduce production cost.

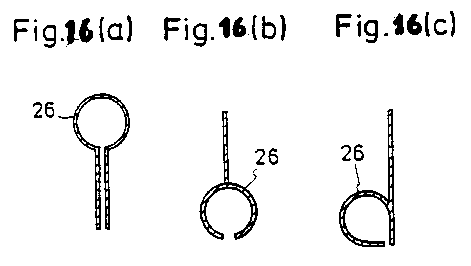

Figure 15 shows a further modification of the turbine rotor. As shown, a core 29 of similar shape to but smaller than the outer wall of the turbine rotor is disposed within the rotor. Because of the core 29, which may cause a small increase in production cost, the driving force can be decreased and the volume of air processed can be increased.

Figures 16(a), 16(b) and 16(c) show various modifications of the air supply pipe 26 of the bubble generating device. Each modification has a straight portion which is impinged on by the liquid flowing round with the rotor and promotes the deflection of this liquid into the upward flow.

The effects and advantages of the present invention may be summarised as follows:

The air supply pipe of the bubble generating means is situated outside but adjacent the turbine rotor which rotates at high speed whereby air is blown into and drawn into the interior of the rotor and subsequently expelled again whereby powerful shearing forces are exerted on the air bubbles so that
(1) the air bubbles generated are particularly small and can thus adsorb finer ink particles than previously; and
(2) the seal which is required can be of simple construction and simple to maintain and clogging of air ports in the rotor by the stock liquid is eliminated by the omission of air ports in the rotor.

## Claims

1. Means for generating air bubbles in a liquid, for instance for use in a flotation machine for de-inking waste paper stock, comprising a turbine rotor in the form of a cage including a plurality of peripheral blades or rods, which define spaces between them, and means for supplying pressurised air in the vicinity of the rotary member, characterised in that the means for supplying pressurised air comprises an air supply line (26) situated adjacent the outer periphery of the turbine rotor and having at least one air supply port (26a) outside the turbine rotor and directed towards the turbine rotor.

2. Means for generating air bubbles as claimed in Claim 1 in which the turbine rotor extends substantially horizontally, characterised in that the air supply line (26) is situated above the turbine rotor (21) and extends substantially parallel to it.

3. Means for generating air bubbles as claimed in Claim 1 or Claim 2 characterised in that the turbine rotor (21) includes an inner core (29) which is coaxial with the rotor axis and whose shape corresponds to that of the rotor but is smaller than it.

4. A flotation machine for de-inking waste paper stock comprising a flotation cell defining a reservoir for a stock liquid which, in use, forms a free liquid surface in the cell, a froth receptacle at the upper portion of the cell for receiving froth floating up to the free liquid surface, a stock inlet at one end of the cell for supplying the stock liquid, a stock outlet at the other end of the cell for discharging the stock liquid and at least one rotary air bubble generating means situated within the lower portion of the cell, characterised in that the rotary air bubble generating means (3) extends between the two ends of the cell (5) with its axis of rotation extending generally horizontally whereby stock liquid introduced through the inlet (1) flows along the length of the cell towards the outlet (2) in at least one spiral flow pattern (11) with a generally horizontal axis and that the air bubble generating means (3) is as claimed in any one of Claims 1 to 3.

## Patentansprüche

1. Einrichtung zur Erzeugung von Luftblasen in einer Flüssigkeit, zum Beispiel zur Verwendung in einer Flotationsmaschine zum Deinken von Altpapiermasse, umfassend einen Turbinenrotor in Form eines Käfigs mit einer Mehrzahl von Blättern oder Stangen am Rand, die zwischen sich Abstände definieren, und Mitteln zum Zuführen von Druckluft in der Nähe des Drehbauteils, dadurch gekennzeichnet, daß das Mittel zum Zuführen von Druckluft eine Luftzuführleitung (26) umfaßt, die benachbart zum äußeren Rand des Turnbinenrotors angeordnet ist und wenigstens eine Luftzuführöffnung (26a) aufweist, welche außerhalb des Turbinenrotors liegt und auf den Turbinenrotor zu gerichtet ist.

2. Einrichtung nach Anspruch 1, bei der sich der Turbinenrotor im wesentlichen horizontal erstreckt, dadurch gekennzeichnet, daß die Luftzuführleitung (26) oberhalb des Turbinenrotors (21) angeordnet ist und sich im wesentlichen parallel zu ihm erstreckt.

3. Einrichtung nach Anspruch 1 oder 2, dadurch gekennzeichnet, daß der Turbinenrotor (21) einen inneren Kern (29) umfaßt, der koaxial mit der Rotorachse ist und dessen Form der des Rotors entspricht, der aber kleiner ist.

4. Flotationsmaschine zum Deinken von Altpapiermasse, umfassend eine Flotationskammer, die ein Reservoir für eine Massenflüssigkeit definiert, die im Betrieb eine freie Flüssigkeitsoberfläche in der Kammer bildet, eine Schaumaufnahme im oberen Bereich der Kammer zum Aufnehmen von Schaum, der an die freie Flüssigkeitsoberfläche aufschwimmt, einen Masseneinlaß am einen Ende der Kammer zum Zuführen von Massenflüssigkeit, einen Massenauslaß am anderen Ende der Kammer zum Abführen der Massenflüssigkeit und wenigstens eine im unteren Bereich der Kammer angeordnete, drehbare Einrichtung zum Erzeugen von Luftblasen, dadurch gekennzeichnet, daß die drehbare Einrichtung (3) zum Erzeugen von Luftblasen sich zwischen den beiden Enden der Kammer (5) erstreckt, wobei ihre Rotationsachse im wesentlichen horizontal verläuft, wodurch durch den Einlaß (1) eingeleitete Massenflüssigkeit in wenigstens einem spiralförmigen Strömungsmuster (11) mit einer im wesentlichen horizontalen Achse entlang der Länge der Kammer auf den Auslaß (2) zu strömt, und daß die Einrichtung (3) zum Erzeugen von Luftblasen der in einem der Ansprüche 1 bis 3 beanspruchten entspricht.

## Revendications

1. Moyen destiné à générer des bulles d'air dans un liquide, destiné par exemple à être utilisé dans une machine de flottation pour le désencrage d'une pâte de vieux papiers, comprenant un rotor de turbine sous la forme d'une cage comprenant une pluralité de pales ou barres périphériques, qui définissent des espaces entre elles, et un moyen destiné à introduire de l'air sous pression au voisinage de l'élément rotatif, caractérisé en ce que le moyen destiné à introduire de l'air sous pression comprend une conduite de distribution d'air (26) située à proximité de la périphérie externe du rotor de turbine et comportant au moins un orifice de distribution d'air (26a) à l'extérieur du rotor de turbine et orienté vers le rotor de turbine.

2. Moyen de génération de bulles d'air selon la revendication 1, dans lequel le rotor de turbine s'étend de façon pratiquement horizontale, caractérisé en ce que la conduite de distribution d'air (26) est située au-dessus du rotor de turbine (21) et s'étend de façon pratiquement parallèle à celui-ci.

3. Moyen de génération de bulles d'air selon la revendication 1 ou la revendication 2, caractérisé en ce que le rotor de turbine (21) comprend un noyau interne (29) qui est coaxial à l'axe du rotor et dont la forme correspond à celle du rotor mais est plus petite que celui-ci.

4. Machine de flottation destinée au désencrage d'une pâte de vieux papiers, comprenant une cellule de flottation définissant un réservoir pour une pâte liquide qui, en utilisation, forme une surface libre de liquide dans la cellule, un réceptacle à écume au niveau de la partie supérieure de la cellule destiné à recevoir l'écume flottant vers le haut jusqu'à la surface libre du liquide, un orifice d'entrée de pâte à une première extrémité de la cellule destiné à l'introduction de la pâte liquide, un orifice de sortie de pâte à l'autre extrémité de la cellule destiné au déchargement de la pâte liquide, et au moins un moyen de génération de bulles d'air rotatif situé à l'intérieur de la partie inférieure de la cellule, caractérisée en ce que le moyen de génération de bulles d'air rotatif (3) s'étend entre les deux extrémités de la cellule (5), son axe de rotation s'étendant de façon généralement horizontale, grâce à quoi la pâte liquide introduite par l'intermédiaire de l'orifice d'entrée (1) s'écoule suivant la longueur de la cellule en direction de l'orifice de sortie (2) suivant au moins une configuration d'écoulement en spirale (11), présentant un axe généralement horizontal, et en ce que le moyen de génération de bulles d'air (3) est tel que revendiqué dans l'une quelconque des revendications 1 à 3.
